# DEMANDE DE BREVET EUROPEEN

(11) **EP 3 845 777 A1**
(43) Date de publication de la demande: **07.07.2021**
(21) Numéro de dépôt: 20213713.9
(22) Date de dépôt: 14.12.2020
(51) Int. Cl.: F16H 57/04

(54) **PROCEDE ET DISPOSITIF DE PILOTAGE DU REFROIDISSEMENT D'UNE BOITE DE VITESSES**

(30) Priorité: 17.12.2019 FR 1914597
(71) Demandeur: RENAULT s.a.s., 92100 Boulogne-Billancourt (FR)
(72) Inventeur: RIESENMEY, Fabrice, 91780 CHALO SAINT MARS (FR)

(57) **Abrégé**

Procédé de pilotage du refroidissement d'un fluide de lubrification dans une boîte de vitesses de véhicule à destination de points de lubrification ciblés, caractérisé en ce que l'huile mise en circulation dans la boîte est refroidie de manière sélective à son passage au travers de déversoirs (1) vers des points de lubrification ciblés, selon un arbitrage effectué entre les besoins de refroidissement identifiés sur ces points, le bilan énergétique des batteries du véhicule, et le confort de l'habitacle.

## Description

La présente invention se rapporte à la lubrification des boîtes de vitesses.

Plus précisément, elle a pour objet un procédé de pilotage du refroidissement d'un fluide de lubrification dans une boîte de vitesse de véhicule, à destination de points de lubrification ciblés.

Elle a également pour objet un dispositif de refroidissement ciblé d'une boîte de vitesses, lubrifiée par barbotage et projection d'huile.

Cette invention trouve une application sur les boîtes de vitesses à rapports discrets, incluant les boîtes étagées à plusieurs rapports d'une part, et les réducteurs de vitesse mono-rapport, d'autre part.

Certains réducteurs, certaines boîtes de vitesses mécaniques ou robotisées, ou certaines transmissions automatiques à double réserve d'huile, sont lubrifiées sans pression d'huile. Leur lubrification s'effectue à partir d'une réserve d'huile située en partie inférieure du mécanisme de la boîte. Le prélèvement de l'huile dans la réserve, est assuré par le « barbotage » de la couronne de pont, ou d'une autre roue dentée, qui crée en tournant un débit plus ou moins important selon sa vitesse de rotation, faisant ainsi office de pompe de transfert.

Le barbotage de composants dans la réserve d'huile, consomme de l'énergie. Il impacte le rendement du groupe motopropulseur (GMP), sa consommation et sa pollution. La lubrification passe par la distribution d'un débit principal d'huile en différentes branches, vers des points de lubrification ciblés de la boîte : roulements sous fortes ou faibles contraintes, groupes synchroniseurs, axes de commande, dentures, etc.).

Le flux d'huile principal en sortie de la couronne de pont, peut être maitrisé de différentes manières : nervures du carter, implantation de gouttières de compartimentation et d'acheminement d'huile, déflecteurs, canalisations, arbres creux, etc. Les gouttières peuvent alimenter, et calibrer en débit l'huile sur différents points de lubrification ciblés, en particulier sur des groupes de synchroniseurs de vitesses ou des roulements. La précision requise pour l'écoulement de l'huile est telle, que la moindre imprécision ou bavure d'usinage ou de moulage, ou encore l'implantation de capteurs postérieure à la mise au point de la boîte, peut se traduire par l'éjection d'huile au travers du reniflard, par une mauvaise lubrification de certains points sensibles, par l'émulsion de l'huile, ou encore par une perte de rendement.

La lubrification des réducteurs ou des boîtes de vitesses, requiert une attention supplémentaire dans les pays chauds. Comme indiqué plus haut, il est préférable de ne pas perturber le flux d'huile, par l'ajout de composants, en particulier un refroidisseur de réserve d'huile, car ces ajouts ont toujours un impact négatif sur la dynamique de l'huile, voire sur le bilan rendement/consommation/pollution de la boîte.

Pour refroidir l'huile, il a déjà été proposé d'implanter dans la réserve, un échangeur parcouru par un serpentin, dans lequel circule le liquide calogène du moteur. La cible de refroidissement est calée sur la température moyenne du moteur. La réserve d'huile est refroidie dans son ensemble. L'huile refroidie, est mise en circulation dans l'ensemble de la boîte.

La mise sous pression d'un système de refroidissement avec une pompe à huile et un circuit additionnel, est aussi envisageable. Toutefois, elle impose la présence d'un échangeur pour évacuer les calories. Comme précédemment, l'huile est refroidie dans son ensemble, sans cibler de points particuliers.

Par la publication FR 3 011 054, on connaît une installation de lubrification d'un réducteur de vitesse de véhicule automobile, où l'on commande la distribution du lubrifiant vers différentes zones de contact, à travers une pluralité de canaux vers des endroits spécifiques à lubrifier, comme des zones d'engrenage de pignons ou des roulements d'arbres. La lubrification peut être ciblée sélectivement, en fonction de la température du lubrifiant, du type de composant, de la vitesse du véhicule, ou encore du rapport engagé. Enfin, l'installation est encombrante, car elle nécessite une pompe, un distributeur hydraulique, un réseau de conduites hydrauliques, ainsi que des moyens d'injection sur les zones à lubrifier, sans cibler pour autant l'injection du fluide réfrigéré.

La présente invention vise à garantir le refroidissement rapide de certains points critiques, à l'intérieur d'un réducteur ou d'une boîte de vitesses.

Dans ce but elle propose que l'huile mise en circulation soit refroidie de manière sélective à son passage au travers de déversoirs vers des points de lubrification ciblés, selon un arbitrage effectué entre les besoins de refroidissement identifiés sur ces points, le bilan énergétique des batteries du véhicule, et le confort de l'habitacle.

De préférence, le refroidissement de l'huile est piloté en intensité sur chaque point de lubrification ciblé de la boîte.

Le dispositif proposé comprend au moins un déversoir d'huile sur des points de lubrification ciblés de la boîte, et des moyens de refroidissement pilotés de l'huile parcourant le déversoir.

Dans un mode de réalisation préféré de l'invention, une branche de dérivation du circuit de climatisation du véhicule, traverse le déversoir.

Grâce à l'étude du profil de roulage et du parcours sélectionné, on sait aujourd'hui prédire une forte sollicitation thermique. Le besoin de refroidir des points critiques peut être ainsi être anticipé et géré.

L'invention sera mieux comprise à la lecture de la description, suivante d'un mode de réalisation non limitatif de celle-ci, en se reportant aux dessins annexés.
[Fig. 1] montre une gouttière réfrigérée selon l'invention.
[Fig. 1A] est un détail de la figure 1.
[Fig. 2] est un circuit de climatisation simplifié.
[Fig. 3] est un logigramme fonctionnel.
[Fig. 4] illustre la limitation de couple.

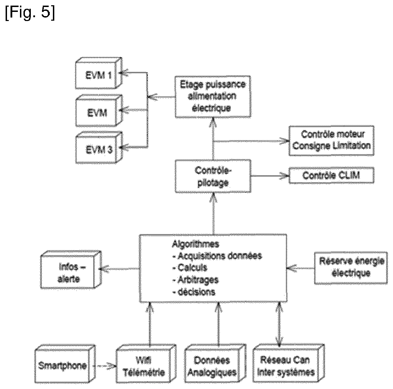

[Fig. 5] est un tableau simplifié de pilotage.

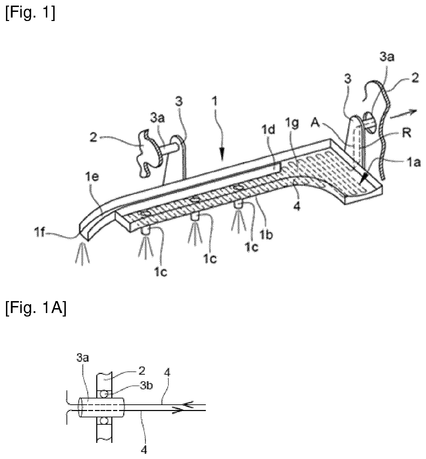

Le dispositif de refroidissement ciblé d'une boîte de vitesses lubrifiée par barbotage et projection d'huile, qui est proposé, comprend au moins un déversoir d'huile sur des points de lubrification ciblés de la boîte, et des moyens de refroidissement de l'huile parcourant le déversoir. Le déversoir de la figure 1 est un exemple de gouttière de lubrification réfrigérante. Elle est montée à l'intérieur de la boîte, au-dessus des arbres et des engrenages à lubrifier. Plusieurs pattes 3, assurent sa fixation à l'intérieur du carter 2 par des tiges 3a. La gouttière 1 est alimentée par projection à partir d'une réserve d'huile située dans la partie inférieure de la boîte, et assure sa distribution sur des zones ciblées.

La gouttière 1 présente une zone de captation d'huile 1a, située dans la zone de projection par la couronne du différentiel, et une zone de distribution 1b, s'étendant le long d'une ligne d'engrenage (non représentée) avec des becs de déversement 1c à débit calibré, sur les pignons et les synchroniseurs. Dans cet exemple, la zone de distribution 1b est divisée par une paroi 1d, délimitant un couloir arrière de déversement 1e par un bec d'extrémité 1f. Ce dernier est dédié à la lubrification du roulement d'extrémité (non représenté), de l'arbre portant les engrenages.

La gouttière peut être en métal, par exemple en aluminium. Elle présente un plancher 1g, constituant une paroi réfrigérante. Dans ce mode de réalisation non limitatif, la goulotte réfrigérante déverse l'huile réfrigérée par le fluide caloporteur du circuit de climatisation, sur des points de lubrification ciblés de la boîte.

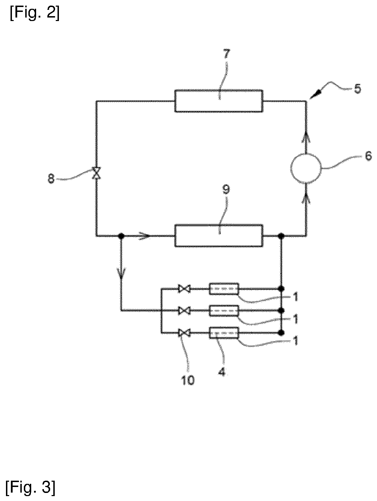

Le plancher 1g est parcouru par le liquide de lubrification entre sa zone de captation et les zones de lubrification ciblées. Il est réfrigérant, grâce à l'intégration d'un tube de circulation 4 d'un agent réfrigérant, de préférence le fluide caloporteur du circuit de climatisation 5 du véhicule (cf. figure 2). L'invention propose de tirer parti de la gouttière 1, dont la fonction première est de capter un flux d'huile et de le diriger de manière sélective vers des points à lubrifier, pour les refroidir.

Son plancher est parcouru par le tube 4, dans lequel circule le fluide réfrigérant. Le tube 4 peut être capillaire. Il est noyé dans la masse du plancher 1g, et chemine en serpentin dans celle-ci. A ses extrémités, il traverse la paroi du carter 2 au travers de la tige 3a, entourée par exemple d'un, joint torique d'étanchéité 3b à ce niveau (cf. figure 1A).

Le fluide réfrigérant est le fluide caloporteur qui s'écoule dans le circuit de climatisation 5 de l'habitacle du véhicule, circule en boucle fermée entre un compresseur 6, un condenseur 7, un détendeur 8, et un évaporateur principal 9 (cf. figure 2). Le dispositif de refroidissement proposé comprend une ou plusieurs branches de dérivation du circuit de climatisation du véhicule, traversant la gouttière. Le fluide réfrigérant peut traverser plusieurs gouttières réfrigérées, du type de la figure 1, dont l'accès est contrôlé par des électrovannes 10. Le fluide réfrigérant fait un trajet aller et retour dans le tube 4 à l'intérieur du plancher 1g de la gouttière 1. Ses extrémités d'aller et de retour (A et R) passent au travers de la cloison étanchéifiée 2 du carter. Le réseau de tubes 4 est branché en parallèle à l'évaporateur principal 7, sur le circuit de climatisation 5. Le fluide caloporteur de la climatisation peut ainsi assurer le refroidissement ciblé de plusieurs zones lubrifiées, par aspersion gravitaire. L'agencement de la figure 1 permet d'assurer la lubrification de la boîte par gravité. Intégré dans un circuit de climatisation, tel que celui de la figure 2. Il permet aussi d'effectuer un arbitrage entre le confort thermique de l'habitacle, la capacité de réserve d'énergie du véhicule, et le bilan thermique de la boîte de vitesses.

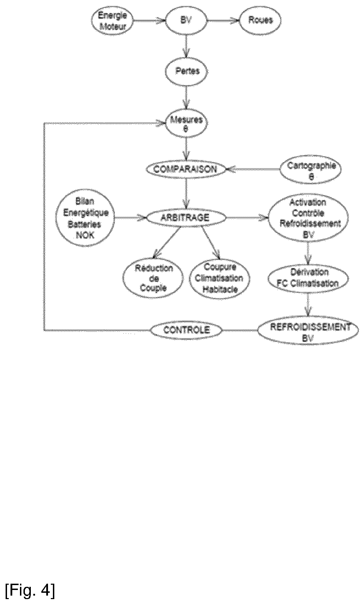

Le logigramme de la figure 3, illustre le procédé de pilotage du refroidissement d'un fluide de lubrification dans une boîte de vitesse de véhicule à destination de points de lubrification ciblés. Il montre comment le contrôle du refroidissement peut être assuré en temps réel, ou en « mode prédictif » Ce procédé repose sur un diagnostic du bilan thermique de la boîte. Comme indiqué sur le schéma, l'énergie transmise à la boîte par les sources motrices du véhicule (moteur thermique et/ou machines électriques) est dirigée vers les roues. Les pertes thermiques sont évaluées en comparant la température de lubrifiant mesurée dans la boîte à une cartographie de températures, établie lors de sa mise au point. Lorsque le bilan décèle une sur-température dans la boîte, l'invention propose de faire un arbitrage entre plusieurs fonctions : le bilan énergétique de la batterie, la demande de climatisation de l'habitacle, et le refroidissement de la boîte. Lorsque le refroidissement de la boîte est requis par une température excessive, on peut soit :
- activer en tout ou partie, le débit du fluide de climatisation en direction de la boîte,
- couper en tout ou partie, la climatisation de l'habitacle,
- limiter le couple délivré par les sources motrices du véhicule, selon le bilan énergétique de la batterie.

L'huile mise en circulation, est refroidie de manière sélective lors de son passage au travers des déversoirs vers les points de lubrification ciblés après arbitrage entre les besoins de refroidissement identifiés sur ces points précis, le bilan énergétique des batteries du véhicule, et le confort de l'habitacle.

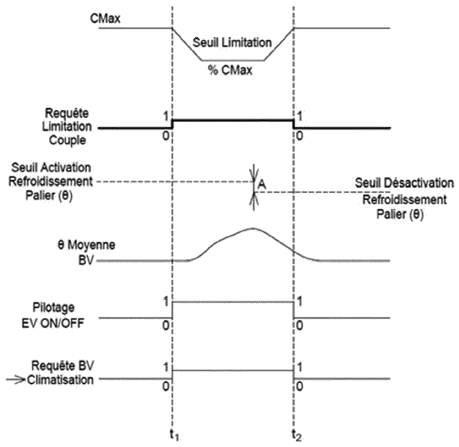

Ces opérations, sont pilotées de préférence par les moyens de calcul de la boîte, qui prend temporairement la main sur d'autres unités, à la suite de cet arbitrage. L'arbitrage est effectué au profit du refroidissement de la boîte, et au détriment du confort thermique de l'habitacle ou du couple d'entraînement. Selon l'exemple de la figure 4 une requête de limitation de couple qui est effective entre les dates t1, et t2, se traduit par un abaissement temporaire du seuil de limitation couple moteur (% de Cmax). Dans le même temps, on constate que la température d'un des paliers de la boîte, qui a dépassé son seuil critique à t1, passe par son maximum avant de décroitre pour repasser sous le seuil à t2. Enfin, l'électrovanne tout ou rien de commande du fluide réfrigérant vers le point de lubrification du palier, passe de l'état 0 (inactif) à 1 (actif) entre t1 et t2, avec la requête coupure adressée au système de climatisation de l'habitacle.

Une électrovanne de modulation tout ou rien (ON/OFF), peut être dédiée à chaque gouttière de lubrification. La boîte est dotée de préférence de capteurs de température, implantés au plus près des points sensibles. Les informations en rapport avec la température, transitent en temps réel par voie filaire ou télémétrique, avec une fréquence d'échantillonnage de l'ordre de 1hz. En variante, l'utilisation d'électrovannes modulées, par exemple à fréquence fixe et rapport cyclique variable, permet en plus de moduler dans le temps, le débit de fluide réfrigérant envoyé sur chaque déversoir.

Dans tous les cas, on exploite des informations de température sur les points de lubrification, pour refroidir l'huile déversée sur certains d'entre eux, de manière à éviter leur surchauffe. Conformément à l'invention, ce refroidissement peut s'effectuer en temps réel ou par anticipation (mode prédictif).

Les algorithmes de l'invention, portent sur l'acquisition de données, et sur les calculs d'arbitrage et de décision. Ils sont de préférence regroupés dans un calculateur autonome, comme celui de la boîte de vitesses, ou bien hébergés par d'autres unités du véhicule, comme le calculateur de climatisation. Le calculateur choisi, reçoit sous forme analogique, les mesures de tous les capteurs de température. Il est relié au réseau CAN inter-systèmes du véhicule et reçoit éventuellement des données de localisation par satellites (GPS), transmises à partir de réseaux extérieurs, avec ou sans l'intervention de smartphones. Enfin, ce calculateur est informé de l'état des batteries représentant la réserve d'énergie électrique du véhicule.

La fréquence d'échantillonnage des algorithmes peut être de l'ordre de 100hz. Les résultats des algorithmes sont exploités dans un étage d'arbitrage, émettant des informations d'alerte, et des consignes destinées au système de contrôle de la climatisation, au système de contrôle moteur (consignes de limitation de couple) et à un étage de puissance d'alimentation électrique d'électrovannes EVM1, EVM2, EVM3, de commande de débit de fluide caloporteur dans chaque goulotte de lubrification. Le refroidissement de l'huile peut ainsi être piloté en intensité sur chaque point de lubrification ciblé de la boîte.

Si une forte demande de refroidissement de l'habitacle intervient en phase de réfrigération de la boîte, la circulation du fluide caloporteur vers l'habitacle peut être diminuée ou coupée, pour favoriser le refroidissement de la boîte. Cependant, si pour des raisons d'autonomie électrique, le système de contrôle de batteries, demande une désactivation du compresseur, alors que le contrôle de la boîte demande sa réfrigération, la désactivation du compresseur peut être empêchée, en imposant au véhicule un mode de propulsion dégradé, avec une stratégie de réduction du couple d'entrée de la boîte.

Grâce à l'invention, la température de la boîte peut être contrôlée en temps réel, ou de manière anticipée, par une commande prédictive des électrovannes, notamment si elles sont modulées. On parvient ainsi à refroidir par anticipation, l'huile déversée sur certains pignons ou roulements de la boîte. Les tendances thermiques de la boîte peuvent être détectées dans la plupart des cas. Elles s'évaluent par calcul, sur la base de dérivées de température. Si par exemple, on définit deux seuils calibrés de vitesse de réchauffement pour un palier, on distingue trois zones de comportement thermique. Dans ces conditions, la commande prédictive du refroidissement de la boîte peut assurer une gestion fine du débit du fluide caloporteur, en économisant de l'énergie. L'économie est réalisée à la source, sur le fonctionnement du moteur thermique, ou de la machine électrique.

En conclusion, l'invention permet de cibler et d'accélérer le refroidissement des points exposés à des surchauffes dans la boîte, notamment en raison de leur forte sollicitation mécanique. Le dispositif de refroidissement peut comprendre plusieurs goulottes de lubrification, alimentées en parallèle par le fluide caloporteur. Le débit de fluide caloporteur est contrôlable en temps réel ou en mode prédictif dans chaque goulotte, par une électrovanne modulée. L'invention tire profit du fluide caloporteur de la climatisation de l'habitacle, en pilotant sa dérivation à l'intérieur de la boîte. Elle assure refroidissement rapide des points ciblés, sans encombrer l'intérieur de la boîte.

En résumé, la méthode et le dispositif proposés permettent :
- de lancer une alerte selon le bilan thermique de la boîte de vitesses, et de la protéger des surchauffes, en
- assurant son refroidissement rapide,
- en réduisant son couple d'entrée,
- en la faisant fonctionner en mode dégradé en cas de besoin, et
- en tenant compte du trajet prévu, et des sollicitations anticipables.

## Revendications

1. Procédé de pilotage du refroidissement d'huile de lubrification dans une boîte de vitesses de véhicule au travers de déversoirs (1) à destination de points de lubrification ciblés dans la boîte, **caractérisé en ce que** l'huile mise en circulation dans la boîte est refroidie de manière sélective, lors de son passage au travers des déversoirs (1), selon un arbitrage effectué entre les besoins de refroidissement identifiés sur ces points, le bilan énergétique des batteries du véhicule, et le confort de l'habitacle.

2. Procédé de pilotage de refroidissement selon la revendication 1, **caractérisé en ce que** le refroidissement de l'huile est piloté en intensité sur chaque point de lubrification ciblé.

3. Procédé de pilotage de refroidissement selon la revendication 1 ou 2, **caractérisé en ce que** l'arbitrage est effectué au profit du refroidissement de la boîte, et au détriment du confort thermique de l'habitacle, ou du couple d'entraînement.

4. Procédé de pilotage de refroidissement selon la revendication 1, 2 ou 3, **caractérisé en ce qu'**il exploite des informations de température sur les points de lubrification ciblés, pour refroidir par anticipation l'huile déversée sur certains d'entre eux, avant leur surchauffe.

5. Procédé de pilotage selon la revendication 4, **caractérisé en ce que** l'huile déversée sur certains pignons ou roulements de la boîte, est refroidie par anticipation.

6. Dispositif de refroidissement ciblé d'une boîte de vitesses lubrifiée par barbotage et projection d'huile, **caractérisé en ce qu'**il comprend au moins un déversoir d'huile (1) sur des points de lubrification ciblés de la boîte, et des moyens de refroidissement de l'huile parcourant le déversoir comprenant une branche de dérivation du circuit de climatisation du véhicule, pilotés conformément à l'une des revendications précédentes.

7. Dispositif de refroidissement ciblé selon la revendication 6, **caractérisé en ce que** le déversoir est une goulotte de lubrification réfrigérante (1), alimentée par projection d'huile à partir d'une réserve située dans la partie inférieure de la boîte de manière à la déverser sur des points de lubrification ciblés, une fois refroidie par le fluide caloporteur du circuit de climatisation du véhicule.

8. Dispositif de refroidissement ciblé selon la revendication 7, **caractérisé en ce que** le plancher (1 g) de la goulotte est parcouru par un serpentin (4), dans lequel circule le fluide caloporteur.

9. Dispositif de refroidissement ciblé selon la revendication 7 ou 8, **caractérisé en ce qu'**il comprend plusieurs goulottes de lubrification (1), alimentées en parallèle par le fluide caloporteur.

10. Dispositif de refroidissement ciblé selon la revendication 7, 8, ou 9, **caractérisé en ce que** le débit de fluide caloporteur dans chaque goulotte (1) est contrôlé par une électrovanne modulée.
